# DEMANDE DE BREVET EUROPEEN

(11) **EP 3 275 581 A1**
(43) Date de publication de la demande: **31.01.2018**
(21) Numéro de dépôt: 16181260.7
(22) Date de dépôt: 26.07.2016
(51) Int. Cl.: B23D 21/04, B26D 1/60, B26D 3/16

(54) **COUTEAU ROTATIF POUR MACHINE DE PRODUCTION D'EMBALLAGES ET PROCEDE UTILISANT LEDIT COUTEAU**

(71) Demandeur: Aisapack Holding SA, 1896 Vouvry (CH)
(72) Inventeur: THURRE, Sébastien, 1871 Choëx (CH); STAHL, Christophe, 1807 Blonay (CH); FERRIN, Didier, 1897 Le Bouveret (CH)
(74) Mandataire: Grosfillier, Philippe

(57) **Abrégé**

Le dispositif de coupe de tubes individuels à partir d'un produit tubulaire continu en mouvement de translation ininterrompu et formé par une machine de production, comprend au moins un châssis fixe par rapport à la machine, un ensemble mobile en translation par rapport au châssis et supportant une tête de coupe entrainée en translation linéaire alternative et en rotation, un premier mécanisme pour entraîner en translation alternative ladite tête de coupe, un second mécanisme pour entraîner en rotation ladite tête de coupe et un troisième mécanisme pour actionner le début et la fin de l'opération de coupe, dans lequel lesdits mécanismes sont fixes par rapport au châssis du dispositif.

## Description

### DOMAINE TECHNIQUE ET ÉTAT DE LA TECHNIQUE

La présente invention concerne le domaine des systèmes de couteaux rotatifs pour des machines de production d'emballages, comme des tubes.

De telles machines de production d'emballages, notamment de tubes, sont connues dans l'état de la technique.

Dans de telles machines, lors de la production d'emballages sous forme de tubes, on crée généralement un produit tubulaire continu qu'il est nécessaire de couper à la dimension (longueur) souhaitée pour former l'emballage individuel voulu, comme un tube. Il est donc nécessaire d'intégrer des moyens de coupe dans la machine pour obtenir en sortie de celle-ci des tubes individuels d'une longueur déterminée (en fonction de la destination desdits tubes). Toutefois, la formation du produit tubulaire étant continue et ne s'arrêtant pas pour permettre la coupe de tubes individuels, il est nécessaire de construire un système de coupe qui soit capable de se déplacer en suivant le produit tubulaire à la vitesse de celui-ci et de découper en même temps les tubes individuels dans le produit tubulaire continu sans arrêt de celui-ci.

Des systèmes de coupe de tubes sont connus dans l'état de la technique, par exemple des publications EP 2 085 169, EP 2 008 749, WO 2015/052338, GB 2 120 591 et KR 20120062045 comme arrière-plan technologique.

Par exemple la publication EP 2 085 169 décrit un système de coupe de tuyaux. Plus précisément, le système connu de ce document comprend une table se déplaçant linéairement en coulissant dans le sens de déplacement du produit tubulaire, cette table supportant notamment un bras de coupe avec un outil de coupe, le bras de coupe étant monté sur un axe de pivotement comprenant un pignon d'entraînement, ledit pignon étant actionné par un dispositif d'entraînement pour commander la rotation du bras dans une position de coupe du produit tubulaire en segments de tube. Le système décrit est néanmoins compliqué et comprend de nombreux éléments embarqués sur la table ce lui confère une inertie importante et limite ses accélérations et ralentissement dans le sens linéaire ce qui par voie de conséquence limite la cadence de production de tubes individuels découpés dans le produit tubulaire.

En conséquence, les dispositifs de coupe rotatifs connus sont limités en cadence à cause des sollicitations créées par le mouvement linéaire alternatif qui génère de fortes accélérations. La réduction de la masse embarquée et par conséquent des forces d'inerties est un facteur déterminant pour permettre l'augmentation des cadences de production.

### SOMMAIRE DE L'INVENTION

Un but de l'invention est de proposer un système de coupe de tubes individuels dans un produit tubulaire formé en continu qui améliore les dispositifs et procédés connus.

Un autre but de la présente invention est de proposer un système de coupe de tubes qui est plus performant que les systèmes connus, notamment qui limite le nombre d'éléments embarqués de façon à réduire son inertie, notamment dans le sens de déplacement du produit tubulaire et à permettre malgré tout une cadence de production élevée.

Un autre but de la présente invention est de proposer un système de coupe qui puisse être facilement mis en oeuvre et adapté au diamètre du produit tubulaire et également à la longueur du tube à découper sans intervention majeure sur la machine de production.

Un autre but de la présente invention est de proposer un système de coupe qui soit capable de suivre les cadences de production des machines actuelles.

Un autre but de la présente invention est de proposer un système qui puisse facilement compenser l'usure des lames de coupe, sans nécessiter un changement de celles-ci.

Un autre but de la présente invention est de proposer un procédé de coupe de tubes individuels à partir d'un produit tubulaire continu et en mouvement ou défilement linéaire ininterrompu.

Dans un mode d'exécution, l'invention concerne un dispositif de coupe de tubes individuels à partir d'un produit tubulaire continu en mouvement de translation ininterrompu et formé par une machine de production, le dispositif comprenant au moins
un châssis fixe par rapport à la machine,
un ensemble mobile en translation par rapport au châssis et supportant une tête de coupe entrainée en translation linéaire alternative et en rotation, la tête de coupe comprenant au moins une lame de coupe montée sur un bras basculant,
un premier mécanisme comprenant au moins un premier moteur pour entraîner en translation alternative la tête de coupe,
un deuxième mécanisme comprenant au moins un deuxième moteur pour entraîner en rotation la tête de coupe,
un troisième mécanisme comprenant au moins un troisième moteur pour actionner le début et la fin de l'opération de coupe avec la lame de coupe. Dans le dispositif de coupe les mécanismes sont fixes dans la direction de défilement du produit tubulaire par rapport au châssis du dispositif.

Dans un mode d'exécution, les moyens d'actionnement du troisième mécanisme sont fixes dans la direction de défilement du produit tubulaire par rapport au châssis.

Dans un mode d'exécution, le bras basculant de la tête de coupe comprend au moins un axe de pivotement et un point d'actionnement; l'axe de pivotement étant entrainé en translation linéaire alternative par le premier mécanisme et en rotation par le deuxième mécanisme; le point d'actionnement étant entrainé en rotation par le troisième mécanisme.

Dans un mode d'exécution, le dispositif comprend au moins une colonne de transmission de l'entraînement reliant l'axe de pivotement et les premier et deuxième mécanismes.

Dans un mode d'exécution, un déphasage en rotation entre le deuxième mécanisme et le troisième mécanisme entraîne un mouvement de rotation du bras basculant et de la lame de coupe autour de l'axe de pivotement.

Dans un mode d'exécution, le deuxième mécanisme comprend au moins une colonne d'entraînement de la tête de coupe entraînée en rotation par un deuxième moteur, le bras basculant et la lame de coupe étant liés à la colonne d'entraînement par un axe de pivotement.

Dans un mode d'exécution, le premier mécanisme comprend un ensemble pignon-crémaillère, le pignon est entraîné par un premier moteur.

Dans un mode d'exécution, la colonne d'entraînement est entraînée en rotation par le deuxième moteur au travers d'une poulie et d'une courroie d'entraînement.

Dans un mode d'exécution, le point d'actionnement est entraîné en rotation par le troisième moteur au travers d'une poulie et d'une courroie d'entraînement. Dans un mode d'exécution, l'invention concerne une machine de production de tubes individuels à partir d'un produit tubulaire continu, la machine comprenant au moins un dispositif tel que décrit dans la présente demande.

Dans un mode d'exécution, l'invention concerne un procédé de coupe de tubes individuels à partir d'un produit tubulaire continu en mouvement de translation ininterrompu, dans lequel
on déplace en translation un ensemble mobile supportant une tête de coupe entraînée en translation linéaire alternative et en rotation, la tête de coupe comprenant au moins une lame de coupe sur un bras basculant libre en rotation autour d'un axe de pivotement,
on entraîne en rotation un point d'actionnement,
on actionne le début et la fin de l'opération de coupe avec la lame de coupe par une déphasage en rotation de la tête de coupe et du point d'actionnement;
on ramène l'ensemble mobile à un point de départ pour un nouveau cycle de coupe.

Dans un mode d'exécution du procédé, l'entraînement en translation est réalisé par un ensemble pignon-crémaillère.

Dans un mode d'exécution du procédé, l'entraînement en rotation est réalisé par un moteur agissant sur une poulie par l'intermédiaire d'une courroie crantée.

Dans un mode d'exécution du procédé, le déphasage permet de régler le point de coupe sur la lame de coupe et de compenser l'usure de ladite lame.

Ainsi en conformité avec les principes de la présente invention les éléments suivants ne sont pas embarqués, c'est-à-dire qu'ils n'ont pas de mouvement linéaire alternatif selon l'axe de défilement du tube:
- ) les moyens d'entrainement rotatif;
- ) les moyens d'actionnement;
- ) les moyens d'entrainement linéaire.

Par contre, les moyens de transmission embarqués possèdent une faible inertie notamment dans la direction axiale, c'est-à-dire dans le sens du mouvement linéaire alternatif. Ces moyens embarqués transmettent les mouvements d'entrainement en translation et rotation jusqu'à la tête de coupe. Ils permettent aussi la transmission du mouvement d'actionnement de la tête de coupe.

### BREVE DESCRIPTION DES DESSINS

La présente invention sera mieux comprise grâce à la description de modes d'exécution de celle-ci et des figures dans lesquelles
La figure 1 illustre un schéma de principe de l'invention;
La figure 2 illustre une vue schématique en coupe de face du système de coupe selon la présente invention;

### DESCRIPTION DETAILLEE

Le dispositif selon l'invention est formé notamment d'une partie fixe qui comprend des éléments lourds et peu pratiques à déplacer et une partie mobile légère et facile à accélérer et ralentir pour effectuer l'opération de coupe sur le produit tubulaire en production.

Le dispositif selon l'invention comprend des moyens d'entrainement en translation qui sont fixes et des moyens de transmission du mouvement de translation qui sont mobiles. Les moyens de transmission sont conçus de manière à avoir une inertie la plus faible possible.

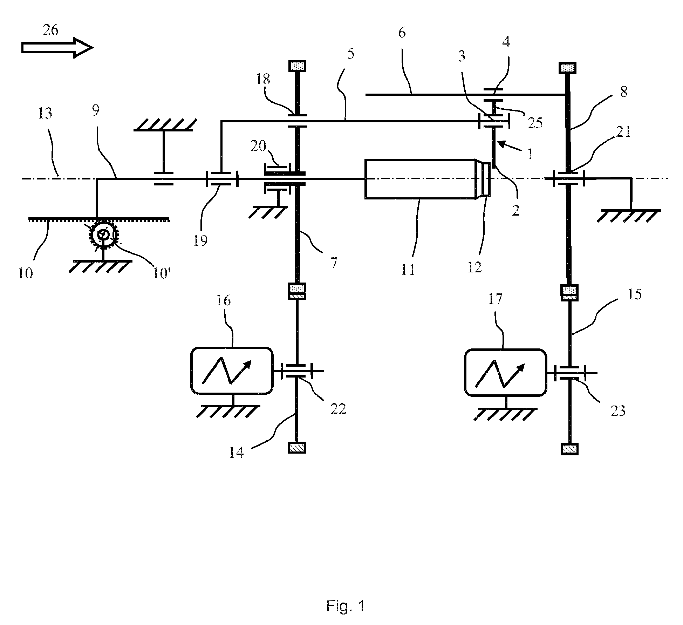

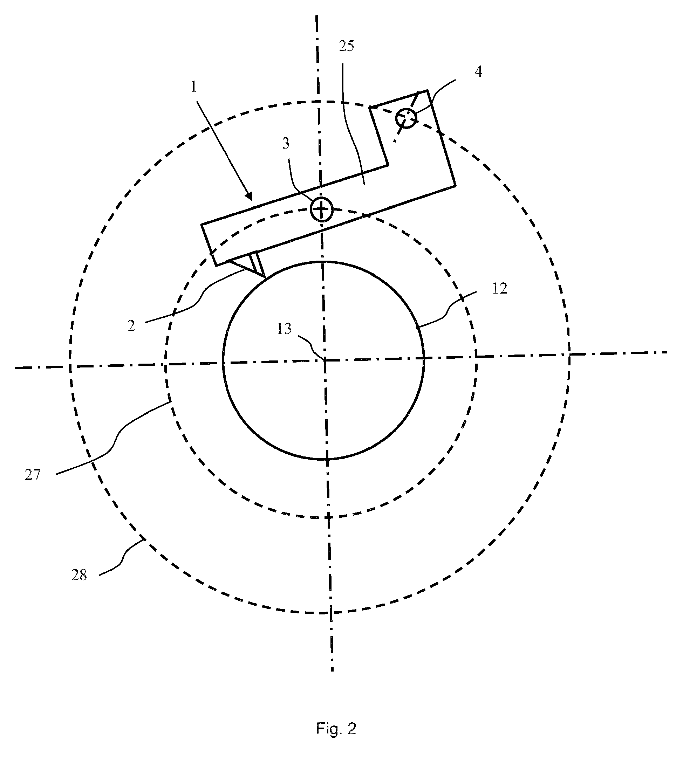

Plus spécifiquement, le dispositif selon l'invention et tel qu'illustré dans les figures 1 et 2 comprend un support de transmission 9 qui est mobile en translation par rapport à la machine de production. Cette translation est obtenue par un système de pignon 10' et crémaillère 10 par exemple, d'autres moyens équivalents étant possibles. De préférence, le pignon 10' est entraîné par un premier moteur 10" de façon directe ou indirecte, ledit moteur 10" étant fixe par rapport à la machine de production. Le mouvement de translation du support 9 est linéaire pour suivre le déplacement d'un produit tubulaire formé dans la machine à la même vitesse et permettre sa découpe rotative en tubes individuels pendant un déplacement en translation ininterrompu selon l'axe longitudinal 13 du produit tubulaire dans la direction 26. Une fois la découpe rotative terminée, les moyens de coupe sont retirés, comme il sera expliqué plus loin dans la présente description, et le support 9 est ramené à une position de départ pour effectuer un nouveau cycle de coupe de tube.

Le dispositif de coupe selon la présente invention comprend en outre, comme moyens d'entraînement, un premier mécanisme d'entraînement en rotation formé notamment d'un deuxième moteur 16, par exemple un servomoteur, monté sur la machine, d'une poulie 7, par exemple mise en rotation par une courroie 14 liée au moteur 16 ou d'autres moyens équivalents, la poulie 7 entraînant au moins une colonne de transmission de l'entrainement 5, ladite colonne 5 coulissant dans un guidage 18 de la poulie 7 ce qui permet son déplacement en translation selon l'axe 13 du produit tubulaire. Ceci permet donc de découpler le mécanisme d'entraînement 14 qui est fixé à la machine tandis que la colonne de transmission 5 entraînée en rotation se déplace avec l'ensemble mobile. On peut prévoir plusieurs colonnes de transmission 5, par exemple deux colonnes ou plus afin de stabiliser le système de coupe.

Une colonne de transmission 5 porte des moyens de coupe sous forme d'une tête de coupe 1 comprenant un bras basculant 25 portant une lame de coupe 2, le bras 25 étant monté sur la colonne 5 par un axe de pivotement 3, permettant le pivotement du bras et de la lame 2 en direction de l'axe 13 du tube ou en s'éloignant dudit axe pour réaliser l'opération de coupe des tubes individuels à partir du produit tubulaire produit en continu. Lors de la coupe, le produit tubulaire est guidé dans le corps tubulaire 11.

Le dispositif comprend, comme moyens d'entraînement, un deuxième mécanisme d'entraînement 15, défini aussi comme un mécanisme d'actionnement dans la suite, comportant un troisième moteur 17 d'actionnement, par exemple un servomoteur, monté sur la machine, une poulie d'actionnement 8, ladite poulie 8 étant entraînée en rotation par le moteur 17 par exemple au moyen d'une courroie ou d'autres moyens équivalents, ladite poulie d'actionnement 8 entraînant en rotation un point d'actionnement 4 du bras 25. Ce point d'actionnement 4 est fixé sur une tige d'actionnement 6 et est utilisé pour réaliser une rotation du bras 25 et de la lame de coupe 2 autour de son axe de pivotement 3 de la façon suivante: le point d'actionnement 4 est décalé par rapport à l'axe de pivotement 3 ce qui a pour effet qu'un mouvement relatif en rotation dudit point d'actionnement 4 par rapport à l'axe de pivotement 3 va faire tourner le bras basculant 25 autour de l'axe 4 est donc le rapprocher (ou l'éloigner) de l'axe du tube 13. Comme les deux poulies 7 et 8 ont le même axe de rotation qui est l'axe du tube 13, un décalage relatif du point d'actionnement par rapport à l'axe de pivotement 3 peut être obtenu par un déphasage relatif des poulies 7 et 8. Ainsi, ce déphasage qui est commandé au niveau des moteurs 16 et 17 permet de déplacer la lame de coupe 2 dans une position de coupe du produit tubulaire en la rapprochant de l'axe 13, ou de la retirer de la position de coupe en l'éloignant de l'axe 13 simplement en jouant sur le déphasage des poulies 7 et 8 et le basculement du bras 25 qui en découle.

La figure 2 illustre de façon schématique les moyens de coupe du produit tubulaire au niveau de la tête de coupe 1. Le bras basculant 25 est monté sur l'axe 3 de pivotement et porte à une extrémité la lame de coupe 2. L'autre extrémité du bras 25 est liée au point d'actionnement 4, et lors de la rotation du système, l'axe de pivotement 3 va suivre le cercle 27 tandis que le point de pivotement 4 va suivre le cercle 28. Comme décrit ci-dessus, un déphasage relatif du point d'actionnement 4 et de l'axe de pivotement aura pour effet une rotation du bras 25, ce qui permet, en fonction du sens du déphasage, de rapprocher la lame 2 de l'axe 13 et donc d'effectuer la coupe du tube ou de l'éloigner de l'axe.

Selon l'invention, le fonctionnement de la tête de coupe peut être résumé de la façon suivante:
- ) L'axe de pivotement et le point d'actionnement sont entrainés en rotation autour de l'axe du tube 13. Ce mouvement est nécessaire pour effectuer la coupe circulaire du tube avec la lame de coupe 2.
- ) L'axe de pivotement 3 et le point d'actionnement 4 sont pilotés séparément. Si leur position relative est constante, il n'y a pas de mouvement radial de la lame de coupe 2. Si leur position relative change, un mouvement radial de la lame de coupe 2 est généré qui permet ainsi la découpe circulaire d'un tube individuel pendant le déplacement en translation à la vitesse de mouvement du produit tubulaire.

Les réglages de la tête de coupe sont de préférence les suivants:
- ) position radiale initiale de la lame de coupe 2 (en fonction du diamètre du tube): la position initiale est ajustée par la distance relative (à savoir un déphasage angulaire) entre le point d'actionnement 4 et l'axe de pivotement 3.
- ) la profondeur de coupe est ajustée par une autre valeur de déphasage angulaire entre le point d'actionnement 4 et l'axe de pivotement 3.
- ) les positions angulaires de début et fin de coupe peuvent être réglées à tout moment car la position angulaire de l'axe de pivotement 3 et celle du point d'actionnement 4 sont connues à chaque instant. Le déphasage est donc réglable en permanence. Il est donc facile d'adapter le système selon l'invention à des diamètres ou des épaisseurs de tubes différents.
- ) Les colonnes de transmission de l'entrainement 5 transmettent les mouvements linéaires et de rotation à la tête de coupe.
- ) L'axe d'actionnement 6 transmet le pilotage de la position relative du point d'actionnement.
- ) La douille de calibration 12 maintient le tube lors de la coupe et centre le tube par rapport à l'axe théorique. La douille de calibration 12 permet de donner une référence de la profondeur de coupe (la position radiale de la lame est réglée par rapport à la douille). La douille de calibration 12 permet également d'obtenir une coupe plus franche en optimisant le jeu axial entre la douille 12 et la lame 2.

Les éléments référencés 18 à 23 sont des moyens de guidage, notamment:
18 est un palier de guidage longitudinal de la colonne 5 dans la poulie 7, pour le déplacement longitudinal de la colonne 5 pendant la coupe;
19 est un palier de guidage en rotation de la colonne 5, sur l'axe 13 du tube,
20 est le palier de guidage en rotation de la poulie 7 sur l'axe 13 du tube;
21 est le palier de guidage en rotation de la poulie 8 sur l'axe 13 du tube;
22 est le palier de guidage du mécanisme d'entraînement 14;
23 est le palier de guidage du mécanisme d'actionnement 15.

La référence 26 indique la direction de défilement du produit tubulaire.

Le procédé mis en oeuvre dans la machine et selon l'invention, rend possible la découpe de tubes individuels sans interrompre la formation du produit tubulaire dans lequel ces tubes individuels sont découpés.

Dans le procédé selon l'invention, on effectue une coupe de tubes individuels à partir d'un produit tubulaire qui a une forme continue et est en mouvement de translation ininterrompu, en mettant en oeuvre les étapes suivantes
- ) on déplace en translation l'ensemble mobile.
- ) on entraîne en rotation le bras basculant avec la lame de coupe autour de l'axe du produit tubulaire,
- ) on entraîne en rotation le point d'actionnement,
- ) on actionne le début et/ou la fin de l'opération de coupe par un déphasage en rotation de la tête de coupe et du point d'actionnement;
- ) une fois la coupe terminée, on ramène l'ensemble mobile à un point de départ.

De préférence, l'entraînement en translation est réalisé par un ensemble pignon-crémaillère 10,10', le pignon étant fixé à la machine et la crémaillère à l'ensemble mobile.

Le procédé selon l'invention permet de couper un corps tubulaire individuel imprimé en référence à une marque ou un cliché en séquence répétitive selon l'axe de défilement du produit tubulaire

Le procédé permet de terminer la coupe des corps tubulaires individuels de façon très précise à une position la plus en aval selon l'axe 13. Cette invention présente l'avantage de simplifier les opérations de transfert desdits corps tubulaires sur les mécanismes ou structures placés en aval.

L'entraînement en rotation est réalisé par un moteur agissant sur une poulie par l'intermédiaire d'une courroie crantée.

Selon le procédé, le déphasage permet également de régler le point de coupe sur la lame de coupe et de compenser l'usure de ladite lame.

Les modes d'exécution de la présente invention sont donnés à titre d'exemples et ne doivent être considérés comme limitatifs. Des variations sont possibles dans le cadre de la protection revendiquée, notamment en faisant appel à des moyens équivalents.

## Revendications

1. Dispositif de coupe de tubes individuels à partir d'un produit tubulaire continu en mouvement de translation ininterrompu et formé par une machine de production, ledit dispositif comprenant au moins
un châssis fixe par rapport à la machine,
un ensemble mobile en translation par rapport au châssis et supportant une tête de coupe (1) entrainée en translation linéaire alternative et en rotation, ladite tête de coupe comprenant au moins une lame de coupe (2) montée sur un bras basculant (25),
un premier mécanisme comprenant au moins un premier moteur (10") pour entraîner en translation alternative ladite tête de coupe,
un deuxième mécanisme comprenant au moins un deuxième moteur (16) pour entraîner en rotation ladite tête de coupe,
un troisième mécanisme comprenant au moins un troisième moteur (17) pour actionner le début et la fin de l'opération de coupe avec la lame de coupe,
le dispositif de coupe étant **caractérisé par le fait que** lesdits mécanismes sont fixes dans la direction de défilement du produit tubulaire par rapport au châssis du dispositif.

2. Dispositif selon la revendication 1, dans lequel les moyens d'actionnement du troisième mécanisme (6, 8, 21, 15, 23, 17) sont fixes dans la direction de défilement du produit tubulaire par rapport au châssis.

3. Dispositif selon l'une des revendications précédentes, dans lequel le bras basculant de la tête de coupe comprend au moins un axe de pivotement (3) et un point d'actionnement (4); l'axe de pivotement étant entrainé en translation linéaire alternative par le premier mécanisme et en rotation par le deuxième mécanisme; le point d'actionnement étant entrainé en rotation par le troisième mécanisme.

4. Dispositif selon l'une des revendications précédentes comprenant au moins une colonne (5) de transmission de l'entraînement reliant l'axe de pivotement et les premier et deuxième mécanismes.

5. Dispositif selon l'une des revendications précédentes, dans lequel un déphasage en rotation entre le deuxième mécanisme et le troisième mécanisme entraîne un mouvement de rotation du bras basculant (25) et de la lame de coupe (2) autour de l'axe de pivotement (3).

6. Dispositif selon l'une des revendications précédentes, dans lequel le deuxième mécanisme comprend au moins une colonne d'entraînement (5) de la tête de coupe entraînée en rotation par un deuxième moteur (16), le bras basculant et la lame de coupe étant liés à ladite colonne d'entraînement par un axe de pivotement (3).

7. Dispositif selon l'une des revendications précédentes, dans lequel le premier mécanisme comprend un ensemble pignon-crémaillère (10,10'), ledit pignon (10') est entraîné par un premier moteur (10"').

8. Dispositif selon l'une des revendications précédentes, dans lequel ladite colonne d'entraînement (5) est entraînée en rotation par le deuxième moteur (16) au travers d'une poulie (7) et d'une courroie d'entraînement (1).

9. Dispositif selon l'une des revendications précédentes, dans lequel ledit point d'actionnement (4) est entraîné en rotation par le troisième moteur (17) au travers d'une poulie et d'une courroie d'entraînement.

10. Machine de production de tubes individuels à partir d'un produit tubulaire continu, ladite machine comprenant au moins un dispositif selon l'une des revendications précédentes.

11. Procédé de coupe de tubes individuels à partir d'un produit tubulaire continu en mouvement de translation ininterrompu, dans lequel on déplace en translation un ensemble mobile supportant une tête de coupe entraînée en translation linéaire alternative et en rotation, ladite tête de coupe comprenant au moins une lame de coupe sur un bras basculant libre en rotation autour d'un axe de pivotement, ,
on entraîne en rotation un point d'actionnement,
on actionne le début et la fin de l'opération de coupe avec la lame de coupe par une déphasage en rotation de la tête de coupe et du point d'actionnement;
on ramène l'ensemble mobile à un point de départ pour un nouveau cycle de coupe.

12. Procédé selon la revendication 11, dans lequel l'entraînement en translation est réalisé par un ensemble pignon-crémaillère.

13. Procédé selon l'une des revendications 11 ou 12, dans lequel l'entraînement en rotation est réalisé par un moteur agissant sur une poulie par l'intermédiaire d'une courroie crantée.

14. Procédé selon l'une des revendications 11 à 13, dans lequel le déphasage permet de régler le point de coupe sur la lame de coupe et de compenser l'usure de ladite lame.
